# EUROPÄISCHE PATENTSCHRIFT

(11) **EP 3 648 925 B1**
(45) Veröffentlichungstag und Bekanntmachung des Hinweises auf die Patenterteilung: **28.09.2022**
(21) Anmeldenummer: 18742696.0
(22) Anmeldetag: 13.06.2018
(51) Int. Cl.: B23K 26/03, B23K 26/08, B23K 26/36, B23K 26/0622, B23K 26/352, B23K 103/16

(54) **VERFAHREN ZUR STRUKTURIERUNG EINER SUBSTRATOBERFLÄCHE**
METHOD FOR STRUCTURING A SUBSTRATE SURFACE
MÉTHODE DE STRUCTURATION D'UNE SURFACE DE SUBSTRAT

(30) Priorität: 06.07.2017 DE 102017006358
(43) Veröffentlichungstag der Anmeldung: 13.05.2020
(73) Patentinhaber: Forschungszentrum Jülich GmbH, 52425 Jülich (DE)
(72) Erfinder: GATZEN, Caren Sophia, 52070 Aachen (DE); MACK, Daniel Emil, 50931 Köln (DE); TANDLER, Martin, 41751 Viersen (DE); VAßEN, Robert, 52134 Herzogenrath (DE)
(86) Internationale Anmeldenummer: PCT/DE2018/000184
(87) Internationale Veröffentlichungsnummer: WO 2019/007449

(56) Entgegenhaltungen:
- EP-A1- 2 669 040
- DE-A1-102008 040 782
- DE-A1-102010 042 503
- DE-A1-102012 107 827
- US-A1- 2013 020 297
- US-A1- 2016 318 292

## Beschreibung

Die Erfindung bezieht sich auf das Gebiet der Keramik, der Metalle sowie der anorganischen Verbundwerkstoffe und betrifft insbesondere die Erhöhung der Haftfestigkeit für darauf aufgebrachte thermisch gespritzte Schichten.

### Stand der Technik

Die Haftfestigkeit thermisch gespritzter Schichten wird - neben angepassten thermomechanischen Eigenschaften - wesentlich durch die Rauigkeit und das geometrische Profil der Grenzfläche zwischen Substrat und gespritzter Schicht bestimmt. Die geometrische Form der Grenzfläche muss einerseits hinreichend Ansatzpunkte bieten, um eine Verklammerung der gespritzten Schicht mit dem Substrat zu ermöglichen, andererseits müssen Spannungsspitzen im Bereich der Grenzschicht vermieden bzw. eine Rissausbreitung begrenzt werden.

Die Deckschichten von Faserverbundwerkstoffen, die mittels vorgetränkter Laminate bzw. durch Infiltration von Fasergelegen hergestellt werden, sind in der Regel zu glatt, um eine hinreichende Verklammerung thermisch gespritzter Schichten zumindest oberhalb einer Schichtdicke von ca. 20 µm, die typischerweise für gasdichte Schichten benötigt werden, ohne den Einsatz einer zusätzlichen Haftvermittlerschicht zu gewährleisten.

Deshalb werden in der Regel durch alternative Verfahren, wie beispielsweise durch Suspensionsauftrag und entsprechende Sintertechnologie, Haftvermittlerschichten mit erhöhter irregulärer Rauigkeit aufgebracht.

Dies bedeutet jedoch nachteilig einen erhöhten Fertigungsaufwand. Zudem ist die erzielte Rauigkeit regelmäßig durch die verwendeten Suspensionseigenschaften bestimmt und mesoskopisch homogen.

Ein Alternative zur Erzeugung fraktaler Geometrien im sub-Mikrometermaßstab auf der Oberfläche eines Substrates wurde bereits durch Behandlung mit gepulster Laserstrahlung aufgezeigt.

So offenbart die US 6,120,725 ein Verfahren zur Erzeugung einer Oberfläche mit einem komplexen Profil und Abmessungen im sub-Mikrometerbereich mittels eines Lasers. Dabei wird das komplexe Profil zunächst in eine Vielzahl von einfachen regelmäßigen Sinuskurven mit unterschiedlichen Parametern zerlegt. Der Laserstrahl wird anschließend mittels Masken oder anderer optischer Hilfsmittel gerichtet über die gesamte Oberfläche des Substrates geleitet, wobei durch Ablation jeweils eine einfache regelmäßige Sinusfunktion auf der Oberfläche des Substrates abgebildet wird. Durch mehrfaches Abfahren der Oberfläche, bei dem jeweils unterschiedliche Sinunsfunktionen abgebildet werden, entsteht so durch Überlagerung der einzelnen Kurven eine komplexe Oberflächenstruktur.

Ferner ist aus DE 10 2009051717 A1 ein Verfahren zur thermischen Beschichtung offenbart, bei dem die Oberfläche des zu beschichtenden Werkstücks vor der Beschichtung aufgeraut wird. Dazu wird mittels eines Lasers eine Mehrzahl von Mikrostrukturelementen unregelmäßig in die Oberfläche des zu beschichtenden Bauteils eingebracht. Ein gepulster Laser wird über die Oberfläche des Werkstücks geleitet. Durch eine Vergrößerung der zeitlichen Überlappung einzelner Strahlungspulse und/oder durch gleichzeitiges Erniedrigen der Strahlungspulsenergie kann beispielsweise der an der aufzurauenden Oberfläche entstehende Dampfdruck erniedrigt werden, so dass eine statistisch unregelmäßige Rauheit an der Oberfläche erzeugt wird. Durch die genannten Variationen soll die Abtragsrate derart beeinflusst werden, dass die Tiefenausmaße der Strukturelemente (stochastisch) variiert werden, teilweise auch mit Hinterschnitt.

EP 2669040 A1 offenbart den Oberbegriff des Anspruchs 1 und beschreibt ein Verfahren zur Nanostrukturierung von keramischen, Glas-, Kohlenstoff-, Bor-, Silizium- und Verbundstoff-Materialien, bei dem die Oberfläche mit einem gepulsten Laser ein- oder mehrmals derart abgefahren wird, dass benachbarte Lichtflecke des Laserstrahls lückenlos aneinander stoßen oder sich überlappen, wobei ein bestimmter Bereich einer vorgegebenen Relation zwischen Verfahrensparametern eingehalten wird.

Aus US 2016/318292 A1 ist ein Verfahren zur Herstellung einer Milliskalenstruktur und eine Mikroskalenstruktur auf einem Metall- oder Keramikbauteil bekannt, wobei die Strukturierung durch Sandstrahlen oder elektromagnetische Strahlung erzeugt wird.

DE 10 2008 040782 A1 offenbart ein Verfahren zur Herstellung eines Bauteilverbundes (Metall-Kunststoff), wobei die Kontaktoberfläche eines ersten metallischen Bauteils vor dem Fügen mit einem zweiten Bauteil derart strukturiert wird, dass eine von einer Nanostruktur überlagerten Mikrostruktur erzeugt wird, die die Festigkeit der Verbindung verbessert.

In DE 10 2010 042503 A1 wird ein Verfahren zur Bearbeitung von Oberflächen zur Strukturierung beschichteter Materialien mit einem gepulsten Laser beschrieben.

Der mit dem Laserstrahl beaufschlagte Bereich des Substrats wird mit Hilfe von Messmitteln überwacht um festzustellen, ob eine abzutragende Schicht bereits abgetragen ist. Dabei wird der Laserstrahl in Abhängigkeit von Werten der Messmittel kontinuierlich angepasst.

Zudem wird in DE 10 2012 107 827 A1 ein Verfahren zur Anpassung des Glanzgrades einer strukturierten Oberfläche eines Presswerkzeuges offenbart, bei dem mit einem Laserstrahl, zumindest ein Teil der Oberfläche in Abhängigkeit von der Strukturtiefe der Oberfläche umgeschmolzen wird. Dabei ist ein Sensor vorgesehen, der dem Laserstrahl vorausläuft und mit dem die Strukturtiefe an einer Stelle der Oberfläche bestimmt wird und der Laserstrahl in Abhängigkeit von der festgestellten Strukturtiefe ein- und ausgeschaltet wird.

Die vorgenannten Methoden benötigen entweder den Einsatz einer separaten Haftvermittlerschicht und damit das Erfordernis einer zusätzlichen Wärmebehandlung, die unter Umständen nachteilig zur Alterung/Degradation der Komponente beiträgt, oder die genannten Oberflächenstrukturierungen sind auf die Erzeugung von flächen-homogenen Rauigkeiten im sub-Mikrometermaßstab begrenzt.

Die Erzeugung einer Oberflächenstruktur, die sowohl die Verklammerung als auch das Rissfortschrittsverhalten in Bezug auf das eingesetzte Material optimiert, ist mit den bekannten Methoden bislang nur durch mehrstufige Verfahren und aufwändiges Maskieren zu erzielen.

Darüber hinaus stellt die Erzeugung flächen-homogener Rauigkeitsprofile bzw. die Verwendung einheitlicher Laserparameter, eine nennenswerte Begrenzung insbesondere im Falle intrinsisch inhomogener Substrate, wie z. B. Faserverbundwerkstoffe oder dünnwandige Strukturen, dar, deren mechanische und thermophysikalische Eigenschaften im Bereich der zu beschichtenden Fläche variieren, so dass es vorteilhaft wäre, die Parameter der Laserbearbeitung für ein homogeneres Ergebnis an die lokalen thermophysikalischen Eigenschaften bzw. das zu erzeugende Rauigkeitsprofil an die lokalen thermomechanischen Eigenschaften des Substrates anzupassen.

### Aufgabe und Lösung

Die Aufgabe der Erfindung ist es, ein Verfahren zur Strukturierung einer Substratoberfläche zur anschließenden Aufbringung einer thermisch gespritzten Schicht bereit zu stellen, bei dem eine gegenüber dem Stand der Technik bekannte verbesserte Verklammerung der gespritzten Schicht mit dem Substrat ermöglicht wird, und zudem Spannungsspitzen im Bereich der Grenzschicht vermieden werden bzw. eine Rissausbreitung begrenzt werden kann.

Ferner ist es die Aufgabe der Erfindung, ein Verfahren zur Strukturierung einer Substratoberfläche zur anschließenden Aufbringung einer thermisch gespritzten Schicht bereit zu stellen, welches die intrinsisch im sub-Millimeterbereich inhomogenen Eigenschaften der Substratoberfläche berücksichtigt und eine daran angepasste Mikrostrukturierung erzeugen kann.

Die Aufgaben der Erfindung werden gelöst durch ein Verfahren zur Strukturierung einer Substratoberfläche mit den Merkmalen des Hautanspruchs.

Vorteilhafte Ausgestaltungen des Verfahrens ergeben sich aus den darauf rückbezogenen Ansprüchen.

### Gegenstand der Erfindung

Im Rahmen der Erfindung wurde herausgefunden, dass durch die Behandlung einer Substratoberfläche durch intensive Laserstrahlung teils destruktive, multiskalige Oberflächenstrukturen im sub-Mikrometer- und Mikrometermaßstab erzeugt werden, die unmittelbar verbesserte Bedingungen für Haftfestigkeit und Zyklierfähigkeit für darauf gespritzte Schichten aufweisen.

Nach gängigem Stand der Technik wird die Effizienz beim Laser-Bohren/Strukturieren mit Laserstrahlung im Nanosekundenbereich wesentlich davon beeinflusst, in wieweit die verdampften bzw. geschmolzenen Materialanteile durch das dabei entstehende Plasma bzw. den Dampf unmittelbar aus der erzeugten Vertiefung herauskatapultiert werden. Damit erhöht sich mit zunehmender Laserleistungsdichte regelmäßig die Abtragsrate überproportional, da Rekondensation unterdrückt wird.

Der Erfindung liegt die Idee zugrunde, dass die Wechselwirkung von vorgeheiztem und teils aufgeschmolzenem Material mit dem gepulsten Laserstrahl vorteilhaft auf andere Art nutzbar gemacht werden kann, insofern als die Verfahrensparameter (z. B. Leistungsdichte, Pulslänge, zeitlicher und örtlicher Überlapp) derart gewählt werden, dass das Material bevorzugt aufgeschmolzen und durch laserinduzierte Plasmaeruptionen in der Umgebung der aktuellen Laserposition rekondensiert bzw. verteilt wird (Aufwurf in der Umgebung des Aufpunktes des Laserstrahls) und somit eine irreguläre Rauigkeit im sub-Mikrometermaßstab erzeugt wird.

Die notwendige Veränderung der Verfahrensparameter gegenüber der üblichen Erzeugung einer tiefen Ablation sieht daher vor, dass erfindungsgemäß:
- eine geringere Pulsspitzenleistung gewählt wird,
- eine langsame Aufheizung größerer Bereiche der Substratoberfläche bis in Schmelzpunktnähe durch
   o eine erhöhte räumliche Nähe der Laserpositionen und/oder
   o eine zeitliche Nähe der Laserpulse und/oder
   o eine Erhöhung der Pulsdauer
   bewirkt wird.

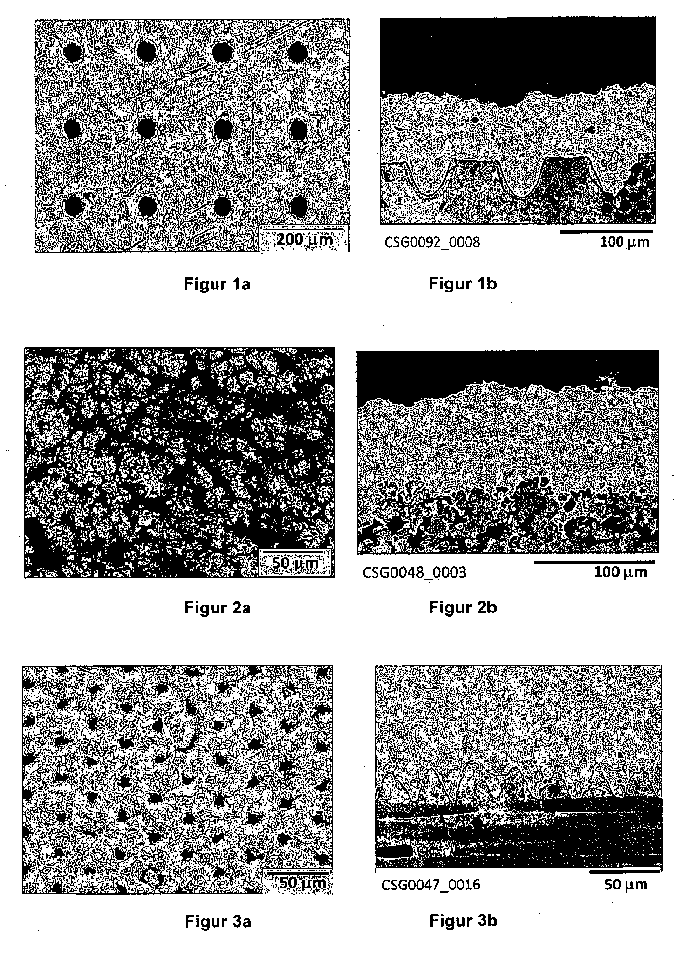

Im Rahmen der Erfindung wurde herausgefunden, dass in Abhängigkeit der gewählten Verfahrensparameter auf der einen Seite eine eher konkrete, topfartige Struktur und auf der anderen Seite eine eher unregelmäßige Feinstruktur (blumenkohlartige Struktur) erzeugt werden kann. Siehe dazu die Figuren 1a und 1b. Diese können in unmittelbarer Nähe zueinander oder auch gleichzeitig überlagert erzeugt werden.

Erfindungsgemäß werden nun Verfahrensparameter vorgeschlagen, die einerseits zu einer Strukturierung der Oberfläche im Mikrometer Maßstab führen, die aber gleichzeitig überlagert sind durch eine weitere Struktur im sub-Mikrometermaßstab. Diese Kombination ist besonders vorteilhaft für eine Verbesserung der Haftung zwischen der so behandelten Oberfläche eines Substrates und einer gegebenenfalls nachfolgend aufgebrachten thermisch gespritzten Schicht.

Unter einer Strukturierung im sub-Mikrometermaßstab wird dabei verstanden, dass die erzeugten Strukturen überwiegend Elemente (z. B. Einschnürungen, Überhänge, Partikel) mit Abmessungen unterhalb eines Mikrometers bis zu wenigen (einstelligen) Mikrometern enthalten.

In Abgrenzung zu dem bislang bekannten Stand der Technik wird dazu ein gepulster, fokussierter Laser ohne weitere optischen Hilfsmittel, wie beispielsweise Masken, Blenden oder komplexe Linsen, gezielt über die aufzurauende Oberfläche des Substrats geleitet, wobei frei wählbare Punkte eines Punkterasters angefahren und mit dem Laser bestrahlt werden.

Die Abmessungen typischer fokussierter Laserspots auf der Oberfläche liegen dabei zwischen 10 - 5000 µm, vorzugsweise zwischen 20 - 100 µm.

Als Substrat können dabei z. B. die folgenden Materialien bzw. Materialmischungen eingesetzt werden: eine Keramik, ein anorganisches Glas, Kohlenstoff, Bor oder Silizium, eine anorganische Faser und/oder einen nicht faserigen Kohlenstoff, ein Bornitrid enthaltender Verbundwerkstoff mit einer Keramik- und/oder Kohlenstoffmatrix, ein Metall-Keramik-Verbundwerkstoff oder ein Verbundwerkstoff aus einem Metall und/oder einer Metalllegierung, der wärmeleitende kohlenstoffhaltige und/oder Bornitrid-haltige Teilchen und/oder Fasern aufweist.

Vorzugsweise werden bei dem erfindungsgemäßen Verfahren die Punkte mit Laserstrahldurchmessern von 20 µm bis 100 µm auf der Oberfläche des Substrats mit einem Abstand zwischen zwei Punkten im Bereich zwischen der Hälfte bis zum 10-fachen des Strahldurchmessers angefahren und bestrahlt. Vorteilhaft wird die Oberfläche des Substrates mit Pulsen mit einer Pulslänge zwischen 1 ns und 1000 ns, mit einer Sequenz zwischen jeweils 5 und 500 Pulsen und mit einem Pulsabstand zwischen 50 ns bis 1 s und Pulsspitzenleistungen zwischen 1 kW und 100 kW bestrahlt.

Je nach Verfahrensvariante können beispielsweise die einzelnen Punkte des Punktrasters (Positionen) nacheinander mit jeweils festen Verfahrensparametern, wie Pulsspitzenleistung, Pulsleistung, Pulslänge, Pulssequenz und Pulsabstand, bestrahlt werden.

Eine weitere Verfahrensvariante sieht vor, dass die einzelnen Punkte des Punktrasters zwar nacheinander angefahren werden, die Verfahrensparameter, wie Pulsspitzenleistung, Pulsleistung, Pulslänge, Pulssequenz und Pulsabstand, aber von Punkt zu Punkt individuell variiert werden können. Dabei kann zusätzlich an einer Position der Pulsabstand auch zwischen den einzelnen Pulsen variiert werden.

Eine weitere Verfahrensvariante sieht vor, dass zumindest einzelne Punkte des Punkterasters auch zwei- oder auch mehrfach angefahren und bestrahlt werden, wobei bei dieser Verfahrensvariante für die Wiederholungen sowohl feste (identische) als auch variable Verfahrensparameter von Punkt zu Punkt ausgewählt werden können.

Für die abtragende Strukturierung können wahlweise und mit höherem Wirkungsgrad/höherer geometrischer Genauigkeit auch gepulste Laser mit Pulslängen im fs- und ps-Bereich mit Pulsspitzenleistungen von 100 W bis 10 MW verwendet werden. Ein Vorheizen des Substrates ist wahlweise auch mit gepulsten Lasern mit Pulsfolgen/Pulslängen im Bereich von ms und sogar "continuous wave" (cw, Dauerstrich) möglich, sofern die Leistung gering genug ist. Diese können als zusätzliche Strahlquelle in den Aufbau integriert werden. Die feine Strukturierung durch "Aufwurf" ist bevorzugt durch ns-Laser zu erzielen.

Die Wellenlänge des eingesetzten Lasers ist abhängig von den Absorptionseigenschaften des Substratmaterials und ein Laser mit hinreichend hohem Absorptionsgrad (z. B. größer 5 %) für die erzeugte Wellenlänge kann durch den Fachmann entsprechend gewählt werden.

Der Laserquerschnitt ist zunächst nur in Bezug auf die Abmessungen der erzeugten ablativen Strukturen (nicht wesentlich kleiner als der Fokusdurchmesser) relevant. Darüber hinaus ist vor allem die auf die Fläche bezogene Intensität von Bedeutung.

Dabei hat eine hohe Pulsspitzenleistung bzw. eine hohe Strahlungsintensität die Wirkung, dass bei hinreichend hoher Intensität die Absorptionswahrscheinlichkeit durch Mehrfachanregungen ansteigt und damit der Wärmeeintrag auf oberflächennahe Grenzschichten begrenzt bleibt.

Eine erhöhte Pulslänge hat die Wirkung, dass die Laserenergie über einen längeren Zeitraum eingebracht wird, so dass durch parallele Wärmedissipation in angrenzende Volumen der Temperaturanstieg am Bearbeitungsort reduziert wird.

Demgegenüber bewirkt eine kürzere Sequenz, von beispielsweise 10 Pulsen im Vergleich zu einer längeren Sequenz von beispielsweise 500 Pulsen, in erster Linie, dass eine erhöhte Energiemenge in das Material eingebracht wird, so dass auch größere Volumen bzw. angrenzende Bereiche durch Wärmedissipation bis in die Nähe des Schmelzpunktes oder darüber erwärmt werden können.

Die Wahl des Pulsabstandes hat Auswirkungen auf den Grad bis zu dem das bestrahlte Material durch Wärmedissipation Energie an seine Umgebung abgeben und abkühlen kann, ehe durch einen weiteren Strahlungspuls ggfs. die Temperatur wiederum erhöht wird.

Ein langer Pulsabstand und insbesondere eine Mehrfachbestrahlung bewirken vorteilhaft, dass auch bei hohen Pulsleistungen bzw. Pulslängen im ns-Bereich ein überwiegend abtragendes Verhalten mit nur geringen Strukturanteilen im sub-Mikrometerbereich erzielt werden können.

Je nach Anforderung kann der Fachmann somit aus einer der genannten Verfahrensvarianten auswählen und durch gezielte Einstellung der Verfahrensparameter, wie beispielsweise Pulsspitzenleistung, Pulsleistung, Fokusdurchmesser, Pulslänge und/oder Sequenz und/oder Pulsabstand, Einfluss auf die erzeugte Oberflächenstruktur nehmen.

Dieses gezielte Vorgehen weist den Vorteil auf, dass sich das durch den auftreffenden Laserstrahl ablatierte Material des Substrats zumindest teilweise außerhalb des Laserstrahlbereichs wieder abscheiden kann. Dies führt vorteilhaft zu einer weiteren Vergrößerung der Rauigkeit. Zudem kann auf diese Weise sichergestellt werden, dass neben einer Strukturierung im sub-Mikrometermaßstab auch eine weitere Strukturierung in einem deutlich größeren Maßstab, beispielsweise im Millimeterbereich, erzeugt wird, die sich vorteilhaft mit der im sub-Mikrometermaßstab überlagert.

Es ist aus der Literatur [1] bekannt, dass die Haftungsmechanismen und tolerierbaren Spannungszustände auf inhomogenen oder strukturierten Substraten regelmäßig ebenfalls in ähnlicher Form inhomogen sind, und insofern eine Anpassung der Grenzflächen-Struktur an die darunterliegende intrinsische Struktur des Substrates sinnvoll wäre. Wesentliche Einflussgrößen sind Material- und Gefügeeigenschaften, wie z. B. elastische Kennwerte, Bruchzähigkeit, Porosität, Faserorientierung und Lagendicken [2].

Es wird daher ein Verfahren benötigt, welches einerseits geeignet ist, die geforderten Variationen in der vertikalen Rauigkeit der Substratoberfläche zu erzeugen. Für über Plasmasprayen (PS) hergestellte Schichten liegt die geforderte Rauigkeit regelmäßig im Bereich von sub-Mikrometer bis zu einigen 10 Mikrometern.

Andererseits sollte das Verfahren vorteilhaft geeignet sein, die Verfahrensparameter in Abhängigkeit von den unter der Substratoberfläche vorliegenden intrinsischen Strukturvariationen in vergleichbarer örtlicher Auflösung anzupassen. Typische Dimensionen für die intrinsischen Strukturvariationen in Faserverbundwerkstoffen leiten sich direkt von den Dimensionen der im Kompositwerkstoff verwendeten Bauelemente ab (wie z. B. Querschnitten der Einzelfasern typisch im Bereich 5 µm bis 40 µm, Querschnitten von Faserbündeln typisch im Bereich 50 µm bis 500 µm, Gelegeabstände in der Laminierung von typisch 100 µm bis 1 mm). Die zu erzeugenden Oberflächentopographien sind deshalb weder als flächenhomogen noch als stochastisch zu beschreiben.

Insofern ist das erfindungsgemäße Verfahren zur Strukturierung einer Oberfläche dazu geeignet, die Oberflächen von inhomogenen Substraten, beispielsweise von Fasern aufweisenden Subtraten zu strukturieren.

Von Bedeutung für diese Art von Substraten sind hier vor allem das Grundmaterial, wie beispielsweise Al₂O₃, ZrO₂, Silikate, SiC, Carbon, Eisen, Ni-Basis-Legierung etc. bzw. seine Dichte/Porosität in der Matrix und die Faserdichte. Diese lokal variierenden Werkstoffparameter beeinflussen entscheidend optische Absorptionseigenschaften, die Wärmeleitfähigkeit/Wärmediffusivität sowie die Wärmekapazität des zu strukturierenden Bereiches.

Des Weiteren sind die Schichtdicke der oberflächlichen Matrixlagen bzw. der Abstand der Faserbündel zur Oberfläche wesentliche Parameter, die die mechanischen Eigenschaften des Substrates und damit die Auswahl der zu erzeugenden Oberflächen-Topographie bestimmen.

Das erfindungsgemäße Verfahren macht sich den wesentlichen Einfluss der Wärmedissipation im Bereich der ns-Pulse-Laserbearbeitung zu Nutze, um in geeigneten Kombination entweder durch langes und/oder wiederholtes Bestrahlen mit einer geringen Pulsspitzenleistung eine irreguläre Oberflächenstruktur im Bereich sub-Mikrometer bis weniger Mikrometer Profiltiefe zu erzeugen bzw. durch ablative Bearbeitung mit dem gleichen (ns)-Laser oder weiteren Laserquellen mit kürzeren Pulsen aber einer deutlich höheren Pulsspitzenleistung verhältnismäßig gröbere Strukturen zur optimierten Begrenzung der Rissausbreitung (Buckling delamination) zu erzeugen.

Typischerweise wird in Substratbereichen mit einer hohen Faserdichte oder mit dicht unter der Substratoberfläche verlaufenden Fasern eine höhere Wärmeleitfähigkeit beobachtet, als in Bereichen, in denen überwiegend die (poröse) Matrix in Oberflächennähe vorliegt.

Daher wird es in der Regel in Bereichen der Substratoberfläche mit einem geringen Faseranteil und/oder mit tief liegenden Fasern, d. h. mit einer vorwiegend porösen Matrix, leichter bzw. schneller möglich sein, in der Grenzschicht ein Erhitzen größerer Substratbereiche mit begrenzter Laserspitzenleistung und "Splashen" zu erreichen, als in solchen Bereichen mit einer höheren Faserdichte bzw. nahe an der Oberfläche verlaufenden Fasern.

Die Erzeugung einer sogenannten Blumenkohlstruktur ist für solche Bereiche somit mit weniger und/oder kürzeren Pulsen im ns-Bereich möglich.

Um vorteilhaft eine an die Oberflächenstruktur des Substrates angepasste Strukturierung zu ermöglichen, ist daher ein Verfahren von Nöten, welches insbesondere eine Variation in Bezug auf den Punkteabstand ermöglicht.

Zudem sieht das erfindungsgemäße Verfahren für diese Art der an die Oberfläche angepassten Strukturierung vor, dass vor der eigentlichen Strukturierung mittels des Lasers eine Analyse der Substratoberfläche erfolgt, so dass eine Variation der Verfahrensparameter in Abhängigkeit von der Oberflächenbeschaffenheit erfolgt. Insbesondere sind dabei das Vorhandensein von Fasern, deren Ausrichtung, deren Anteil in der Matrix und deren Lage in Bezug auf die Oberfläche zu berücksichtigen.

### Spezieller Beschreibungsteil

Die Erfindung wird nachfolgend anhand einiger vorteilhafter Ausführungsbeispiele und Figuren näher erläutert, ohne dass dies zu einer Einschränkung des Schutzbereiches führt. Ein Beschichtungsfachmann kann daraus leicht die entsprechenden Parameter für das erfindungsgemäße Verfahren entnehmen, die für eine gewünschte Aufrauhung/Strukturierung des zu beschichtenden Substrates benötigt werden.
A. Voruntersuchungen:
   Die unbehandelte und für einen Laserstrahl zugängliche Oberfläche eines Verbundes oxidkeramischer Faser/oxidkeramische Matrix (Al₂O₃-Fasern in einer Matrix aus Al₂O₃/ZrO₂) wurde ohne irgendeine Vorbehandlung mit einem gepulsten Faser-Laser der Wellenlänge 1062 nm bei Umgebungsatmosphäre, Umgebungsdruck und Umgebungstemperatur behandelt.
   Dazu wurde einerseits
      - an den Positionen eines frei gewählten Punktrasters mit einem Abstand zwischen zwei Punkten von jeweils mindestens 200 µm,
      - mit einem gepulsten Laserstrahl,
      - mit Fokusdurchmesser von 40 µm,
      - mit einer Pulslänge von 200 ns,
      - mit einer Pulsspitzenleistung von ca. 15 kW,
      - in einer Sequenz von jeweils 50 Pulsen,
      - mit einem Pulsabstand von 1/f = 1/20 kHz = 50 ns

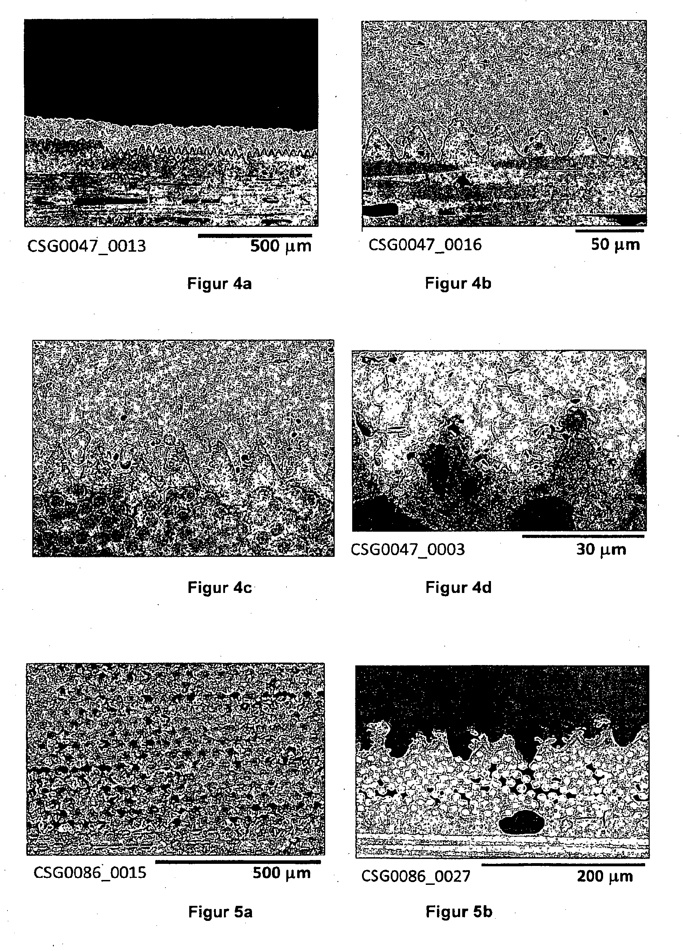

      eine Struktur erzeugt, die jeweils aus einem regelmäßigen Topfprofil von ca. 45 µm Durchmesser und 70 µm Tiefe, sowie einem umgebenden Bereich mit unregelmäßigem Aufwurf von sub-Mikrometer bis wenige Mikrometer Höhe besteht.
      Die Figuren 1 a und 1 b zeigen die erzeugten Topfprofile in der Aufsicht (1a) sowie im Querschliff zusammen mit einer durch Plasmaspritzen hergestellten Deckschicht aus Y₂O₃ (1b).
   Andererseits wurde in einer weiteren unbehandelten Probe
      - an den Positionen eines frei gewählten Punktrasters mit einem Abstand zwischen zwei Punkten von typischerweise 30 µm Abstand,
      - mit einem gepulsten Laserstrahl,
      - mit einem Fokusdurchmesser von 40 µm,
      - mit einer Pulslänge von 50 ns,
      - mit einer Pulsspitzenleistung von ca. 15 kW,
      - in einer Sequenz von jeweils 500 Pulsen,
      - mit einem Pulsabstand von 1/f = 1/20 kHz = 50 ns
      eine blumenkohlartige Struktur erzeugt, die jeweils aus einem vollständig unregelmäßigen Profil mit Unterstrukturen im Bereich sub-Mikrometer bis wenige Mikrometer Höhe besteht. Die Figuren 2a und 2b zeigen entsprechende Strukturen in der Aufsicht (2a) sowie im Querschliff zusammen mit einer durch Plasmaspritzen hergestellten Deckschicht aus Y₂O₃ (2b).
B. Ausführungsbeispiele
   1. Die unbehandelte und für einen Laserstrahl zugängliche Oberfläche eines Verbundes oxidkeramischer Faser/oxidkeramische Matrix (Al₂O₃-Fasern in einer Matrix aus Al₂O₃/ZrO₂) als Substrat wurde ohne irgendeine Vorbehandlung mit einem gepulsten Faser-Laser der Wellenlänge 1062 nm bei Umgebungsatmosphäre, Umgebungsdruck und Umgebungstemperatur behandelt.
      Dazu wurde auf der Oberfläche des Substrats umfassend
      - an den Positionen eines frei gewählten Punktrasters mit jeweils 30 µm Abstand,
      - mit einem gepulsten Laserstrahl,
      - mit einem Fokusdurchmesser von 40 µm,
      - mit einer Pulslänge von 50 ns,
      - mit einer Pulsspitzenleistung von ca. 15 kW,
      - in einer Sequenz von jeweils 500 Pulsen,
      - mit einem Pulsabstand von mehr als 500 ms
      eine Struktur erzeugt, die jeweils aus einem regelmäßigen Profil mit schräg ansteigenden Kanten und Profilspitzen im Bereich weniger Mikrometer Breite besteht. Die Tiefe des Profils lag regelmäßig zwischen 30 und 50 µm. Das Ergebnis dieser Strukturierung ist in den Figuren 3a und 3 b dargestellt.
   2. Die unbehandelte und für einen Laserstrahl zugängliche Oberfläche eines Verbundes oxidkeramischer Faser/oxidkeramische Matrix (Al₂O₃-Fasern in einer Matrix aus Al₂O₃/ZrO₂) als Substrat wurde ohne irgendeine Vorbehandlung mit einem gepulsten Faser-Laser der Wellenlänge 1062 nm bei Umgebungsatmosphäre, Umgebungsdruck und Umgebungstemperatur behandelt.
      Dazu wurden auf der Oberfläche des Substrats
      - an den Positionen eines frei gewählten Punktrasters mit jeweils 30 µm Abstand,
      - mit einem gepulsten Laserstrahl,
      - mit Fokusdurchmesser von 40 µm,
      - mit einer Pulslänge von 50 ns,
      - mit einer Pulsspitzenleistung von ca. 15 kW,
      - in einer Sequenz von jeweils 500 Pulsen,
      - mit einem Pulsabstand von 50 ns bis 1s
      - bei zeitversetzt/wechselnd/alternierend bestrahlten/angefahrenen Positionen Strukturen erzeugt, die jeweils aus einem Topfprofil von ca. 30 µm Durchmesser und 10 bis 40 µm Tiefe bestehen, sowie eine unterschiedlich deutlich ausgeprägte unregelmäßige Feinstruktur im Bereich von sub-Mikrometer bis wenige Mikrometer Höhe aufweisen. Die Ergebnisse dieser erfindungsgemäßen sub-Mikrometer- und Mikrometerstrukturierung sind in den Figuren 4a bis 4d dargestellt.
   3. Die unbehandelte und für einen Laserstrahl zugängliche Oberfläche eines Verbundes oxidkeramischer Faser/oxidkeramische Matrix (Al₂O₃ Fasern in einer Matrix aus Al₂O₃ und ZrO₂) wurde ohne irgendeine Vorbehandlung mit einem gepulsten Faser-Laser der Wellenlänge 1062 nm bei Umgebungsatmosphäre, Umgebungsdruck und Umgebungstemperatur behandelt.
      Dazu wurden auf der Oberfläche des Substrats
      - an den Positionen eines frei gewählten Punktrasters mit jeweils mindestens 30 µm Abstand,
      - mit einem gepulsten Laserstrahl,
      - mit einer Pulslänge von 50 ns,
      - mit einer Pulsspitzenleistung von ca. 15 kW,
      - in einer Sequenz von jeweils 50 bis 200 Pulsen,
      - mit einem Pulsabstand von 50 ns bis 1 s,
      - bei zeitversetzt/wechselnd/alternierend bestrahlten/angefahrenen Positionen Strukturen erzeugt, die jeweils aus einem Topfprofil von ca. 30 bis 50 µm Durchmesser und 10 bis 50 µm Tiefe bestehen, sowie eine unterschiedlich deutlich ausgeprägte unregelmäßige Feinstruktur im Bereich von sub-Mikrometer bis wenige Mikrometer Höhe aufweisen.

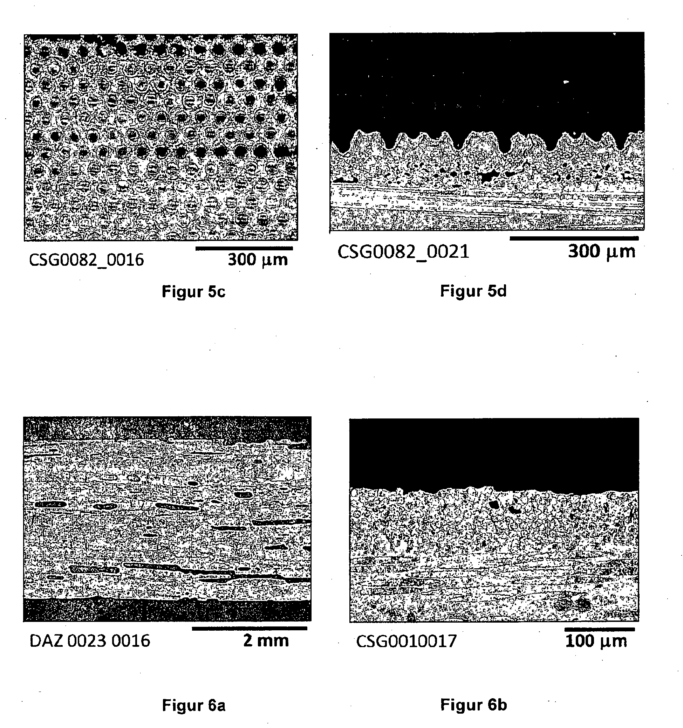

Die Unterschiede, die sich aus dem vorgewählten Punktraster ergeben, sind in den Figuren 5a und 5b sowie 5c und 5d zu erkennen, wobei für 5a und 5b ein Rasterabstand von 45 µm, bei einer Pulslänge von 50 ns und einer Pulssequenz von 50 Pulsen gewählt wurde, während für 5c und 5d ein Rasterabstand von 60 µm, bei einer Pulslänge von 50 ns und einer Pulssequenz von 50 Pulsen gewählt wurde.

Unter der Bezeichnung "zeitversetzt/wechselnd/alternierend bestrahlten/angefahrenen Positionen" ist hierbei gemeint, dass beispielsweise bei Punkten mit Pulsabständen größer als 50 ns, der Laser, der bis 100 kHz Pulsrate liefern kann, zwischenzeitlich andere Punkten anfahren und bestrahlen kann, somit also Bearbeitungszeit gespart wird, und z. B. 100 Punkte mit je 50 Pulsen bei 1s Pulsabstand nicht 100 x 50 s an Zeit benötigen, sondern vorteilhaft nur 50,0001 s (50 s + 100 x 50 ns).

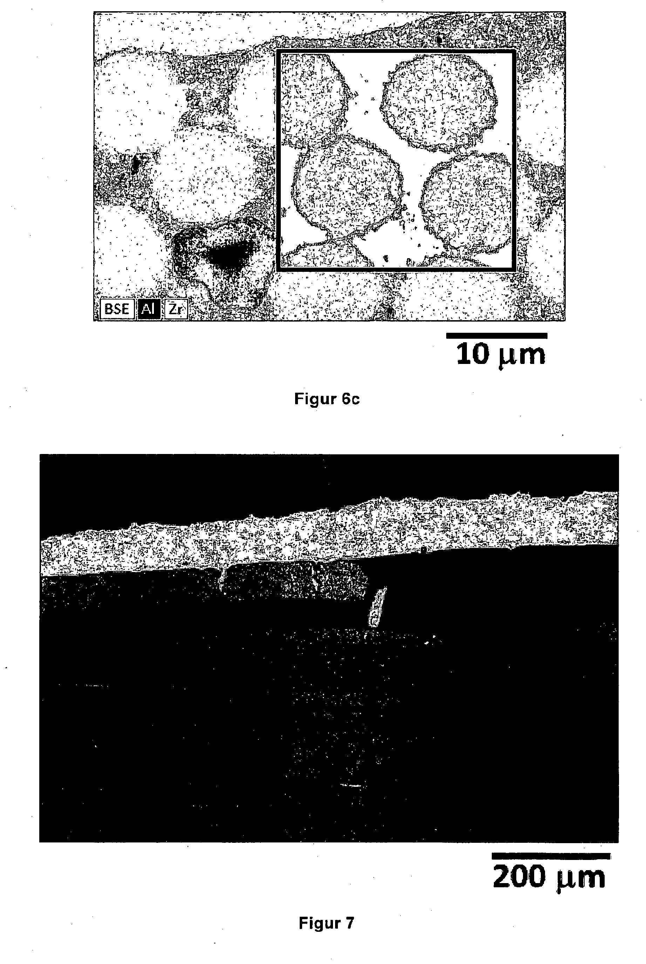

Für die erfindungsgemäßen Ausführungsformen, bei denen zunächst die Oberfläche des Substrates analysiert wird, und die Wahl der Verfahrensparameter dann in Abhängigkeit von den Eigenschaften der Substratoberfläche gewählt werden, zeigen die Figuren 6a bis 6c typische Mikrostrukturen einer Ox/Ox-Faserverbundkeramik mit einer porösen Matrix. Die Fasern umfassen in dem vorliegenden Fall Al₂O₃ während die Matrix Al₂O₃/ZrO₂ umfasst. In der Figur 6c bedeuten die einheitlich grauen, kreisförmigen Bereiche die Faserquerschnitte, der grau-melierte Bereich die Matrix und die dunkel grauen Bereiche Hohlräume in der Matrix. Die Struktur weist dabei Schwankungen betreffend die Porosität und die Faserdichte, ebenso wie die Faserlage und die Fasertiefe bezogen auf die Substratoberfläche in einem weiten Größenbereich auf.

In der Figur 7 ist die Delamination einer thermisch gespritzten EBC-Keramikschicht dargestellt, die sich aufgrund unterschiedlicher Spannungszustände und Haftung in Bereichen mit hoher/niedriger Faserdichte bzw. hoher/niedriger Fasertiefe ausgebildet hatte. Die thermisch gespritzte Schicht ist hier hellgrau dargestellt. Die dunkelgrauen Bereiche stellen die Einbettmasse dar, die sowohl auf der thermisch gespritzten Schicht, als auch zwischen dieser und der Substratoberfläche zu finden ist, wo die Delamination stattgefunden hat. Auf der linken Seite ist zu erkennen, dass noch Matrixreste an der delaminierten thermisch gespritzten Schicht haften.

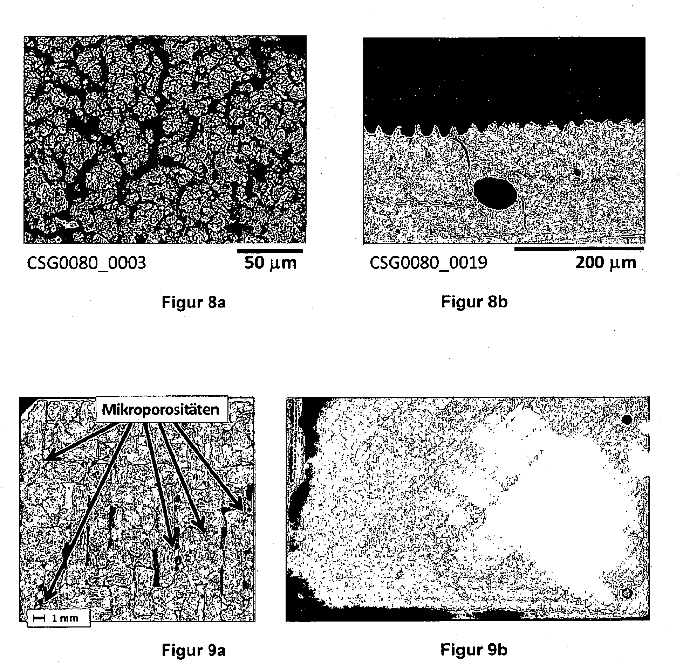

In den Figuren 8a und 8b sind Proben in Aufsicht (a) bzw. als Querschliff (b) dargestellt, bei denen erfindungsgemäß Bereiche mit einer oberflächennahen dickeren Lagendicke der bedeckenden Matrixschicht mit einem Oberflächenprofil mit einem veränderten (hier vergröberten) Rauhigkeitsprofil versehen wurden. Die Bereiche mit oberflächennah vorliegenden Faserbündeln wurden dementsprechend vorteilhaft nur mit einer feinen sub-Mikrometerstruktur versehen, um die Fasern nicht zu schädigen.

Die Analyse der Substratoberfläche, insbesondere die Variation der Wärmeleitfähigkeit gekoppelt mit einem Struktur- bzw. Materialwechsel, kann auf unterschiedliche Arten erfolgen. Beispielsweise kann die Substratoberfläche mittels einer Thermographie analysiert werden, bei der die Oberfläche mit Licht- oder Wärme beaufschlagt wird und wenigstens ein Lichtoder Wärmedetektor das von der Oberfläche rückgestreute Licht oder die rückgestreute Wärme detektieren kann, beispielsweise mittels einer IR-Kamera. Die Thermographie ist insoweit ein bildgebendes Verfahren zur Anzeige der Oberflächentemperatur von Objekten bzw. Strukturen. Dabei wird die Intensität der Infrarotstrahlung, die von einem Punkt ausgeht, als Maß für dessen Temperatur gedeutet. Die Auflösung der so erhaltenen Daten hängt einerseits von den verwendeten Detektoren aber auch von den Anregungsquellen, z. B einem fokussierten Laser ab.

In den Figuren 9a und 9b sind die Ausrichtung der Fasern, die Oberflächenschichtdicken sowie bedeckte Porten erkennbar, wie sie sich aus einer Standard Thermographie ergeben.

Als weitere geeignete Analysemethode ist beispielsweise die ortsaufgelöste akustische Spektroskopie (SRAS = Spatially Resolved Acoustic Spectroscopy) zu nennen, bei der optische und akustische Bilder die mechanischen Eigenschaften der Oberfläche wiederspiegeln. Solche Analysevorrichtungen können vorteilhaft direkt zusammen mit dem Laser zur Strukturierung angeordnet werden, ähnlich wie es bereits beim Monitoring beim Laserschweißen dokumentiert ist [3].

In dieser Anmeldung zitierte Literatur:
[1]X. H. Liu, M. W. Lane, T. M. Shaw, E. Simonyi, "Delamination in patterned films", International Journal of Solids and Structures 44 (2007) 1706 - 1718.
[2] Choi, S.R., J.W. Hutchinson, and A.G. Evans, Delamination of multilayer thermal barrier coatings. Mechanics of Materials, 1999, 31(7): p. 431-447.
[3] D. Y. You, X. D. Gao and S. Katayama, "Review of laser welding monitoring", Science and Technology of Welding & Joining, April 2014, DOI: 10.1179/1362171813Y.0000000180.

## Patentansprüche

1. Verfahren zur Erzeugung einer strukturierten Oberfläche auf einem Substrat,
bei dem Oberflächenstrukturen mit Abmessungen im sub-Mikrometerbereich durch Behandlung mit einem intensiven gepulsten Laserstrahl erzeugt werden, ***dadurch gekennzeichnet,***
- **dass** ein inhomogenes Substrat eingesetzt wird, welches intrinsische Strukturvariationen im sub-Millimeterbereich aufweist, und
- **dass** bei dem Verfahren zunächst die Oberfläche des Substrats analysiert wird, und die Verfahrensparameter Fokusdurchmesser, Pulsspitzenleistung, Pulsenergie, Punkteabstand, Pulslänge, Pulsabstand, und/oder Pulssequenz in Abhängigkeit von der Oberflächenbeschaffenheit ausgewählt werden,
- sodass durch die Behandlung mit dem intensiv gepulsten Laserstrahl eine an die intrinsisch im sub-Millimeterbereich inhomogenen Eigenschaften der Substratoberfläche angepasste, multiskalige Oberflächenstruktur im sub-Mikrometer- und Mikrometerbereich durch zum Teil abtragende Behandlung erzeugt wird, wobei sich das durch den Laserstrahl ablatierte Material teilweise außerhalb des Laserstrahlbereichs wieder abscheiden kann.

2. Verfahren nach Anspruch 1,
bei dem ein Substrat eingesetzt wird, umfassend
- wenigstens eine anorganische Faser und/oder einen nicht faserigen Kohlenstoff,
- einen Bornitrid enthaltenden Verbundwerkstoff mit einer Keramik- und/oder Kohlenstoffmatrix,
- wenigstens einen Metall-Keramik-Verbundwerkstoff oder
- wenigstens einen Verbundwerkstoff aus einem Metall und/oder einer Metalllegierung, der wärmeleitende kohlenstoffhaltige und/oder Bornitrid-haltige Teilchen und/oder Fasern aufweist.

3. Verfahren nach einem der Ansprüche 1 bis 2,
bei dem ein Substrat umfassend Fasern eingesetzt wird, und
die Verfahrensparameter in Abhängigkeit von dem Vorhandensein von Fasern, deren Ausrichtung, deren Anteil in dem Verbundwerkstoff und deren Lage in Bezug auf die Oberfläche ausgewählt werden.

4. Verfahren nach einem der Ansprüche 1 bis 3,
bei dem ein fokussierter Laser mit Laserstrahldurchmessern von 20 µm bis 100 µm auf der Oberfläche des Substrats eingesetzt wird.

5. Verfahren nach einem der Ansprüche 1 bis 4,
bei dem die Oberfläche des Substrates an Positionen eines frei gewählten Punktrasters angefahren wird, wobei die Punkte mit einem Abstand im Bereich zwischen der Hälfte und dem 10-fachen des Laserstrahldurchmessers angefahren werden.

6. Verfahren nach einem der Ansprüche 1 bis 5,
bei dem die Punkte mit einer Pulslänge zwischen 1 ns und 1000 ns, mit einer Pulssequenz zwischen jeweils 50 und 500 Pulsen, mit einem Pulsabstand zwischen 50 ns bis 1 s und mit Pulsspitzenleistungen zwischen 1 kW und 100 kW bestrahlt werden.

7. Verfahren nach einem der Ansprüche 1 bis 6,
bei dem für die Strukturierung der Substratoberfläche einzelne Punkte des Punktrasters nur einmal mit dem Laser bestrahlt werden.

8. Verfahren nach einem der Ansprüche 1 bis 7,
bei dem für jeden Punkt des Punktrasters eine frei wählbare Pulslänge zwischen 50 ns und 200 ns eingestellt wird.

9. Verfahren nach einem der Ansprüche 1 bis 8,
bei dem für jeden Punkt des Punktrasters ein frei wählbarer und zwischen den einzelnen Pulsen variabel eingestellter Pulsabstand zwischen 50 ns und 1 s eingestellt wird.

10. Verfahren nach einem der Ansprüche 1 bis 4,
bei dem für die Strukturierung der Substratoberfläche einzelne Punkte des Punktrasters zumindest teilweise mehrfach bestrahlt werden.

11. Verfahren nach einem der Ansprüche 1 bis 10,
bei dem ein Substrat mit einer Oberfläche eingesetzt wird, welche zumindest teilweise mit einer Oxidschicht überzogen ist.

12. Verfahren nach einem der Ansprüche 1 bis 11,
bei dem die lokal einzustellenden Verfahrensparameter in unmittelbarer zeitlicher Nähe zur Bearbeitung durch parallele Auswertung von Sensordaten der Substratoberfläche ausgewählt werden.

## Claims

1. A method for generating a structured surface on a substrate, whereby surface structures with dimensions in the sub-micrometre range are generated by treatment with an intense pulsed laser beam, ***characterized in***
- **that** an inhomogeneous substrate is used, which has intrinsic structure variants in the sub-millimetre range, and
- **that**, in the method, at first the surface of the substrate is analysed, and the method parameters focus diameter, pulse peak power, pulse energy, point spacing, pulse length, pulse spacing, and/or pulse sequence are selected in dependence of the surface nature,
- so that, by the treatment with the intense pulsed laser beam, a multiscale surface structure, which is adapted to the intrinsically inhomogeneous properties of the substrate surface in the sub-millimetre range, is generated by partly removing treatment in the sub-micrometre and micrometre range, wherein the material ablated by the laser beam can be deposited again partially outside the laser beam area.

2. The method according to claim 1,
whereby a substrate is used, comprising
- at least one inorganic fibre and/or a non-fibrous carbon,
- a boron nitride-containing composite material with a ceramic and/or carbon matrix,
- at least one metal-ceramic composite material or
- at least one composite material made of a metal and/or a metal alloy having thermally conductive carbon-containing and/or boron nitride-containing particles and/or fibres.

3. The method according to any one of claims 1 to 2,
whereby a substrate comprising fibres is used, and
the method parameters are selected in dependence of the presence of fibres, their alignment, their proportion in the composite material and their position in respect of the surface.

4. The method according to any one of claims 1 to 3,
whereby a focused laser with laser beam diameters of 20 µm to 100 µm is used on the surface of the substrate.

5. The method according to any one of claims 1 to 4,
whereby the surface of the substrate is moved to positions of a freely selected point grid, wherein the points are approached at a distance in the range between half and 10 times the laser beam diameter.

6. The method according to any one of claims 1 to 5,
whereby the points are irradiated with a pulse length between 1 ns and 1000 ns, with a pulse sequence between 50 and 500 pulses each, with a pulse spacing between 50 ns to 1 s and with pulse peak powers between 1 kW and 100 kW.

7. The method according to any one of claims 1 to 6,
whereby individual points of the point grid are only irradiated once with the laser for structuring the substrate surface.

8. The method according to any one of claims 1 to 7,
whereby a freely selectable pulse length between 50 ns and 200 ns is set for each point of the point grid.

9. The method according to any one of claims 1 to 8,
whereby a pulse spacing, which is freely selectable and variably set between the individual pulses, between 50 ns and 1 s is set for each point of the point grid.

10. The method according to any one of claims 1 to 4,
whereby individual points of the point grid are at least partially repeatedly irradiated for structuring the substrate surface.

11. The method according to any one of claims 1 to 10,
whereby a substrate with a surface is used, which is at least partially covered with an oxide layer.

12. The method according to any one of claims 1 to 11,
whereby the method parameters to be set locally are selected in the immediate temporal vicinity of the processing by means of parallel evaluation of sensor data of the substrate surface.

## Revendications

1. Procédé de production d'une surface structurée sur un substrat, dans lequel on produit des structures de surface ayant des dimensions dans le domaine du sous-micron par traitement par un faisceau laser intense pulsé,
**caractérisé**
- **en ce que** l'on utilise un substrat, qui n'est pas homogène et qui a des variations intrinsèques de structure dans le domaine du sous-millimètre, et
- **en ce que**, dans le procédé, on analyse d'abord la surface du substrat et on choisit les paramètres du procédé diamètre du foyer, puissance de pointe des impulsions, énergie des impulsions, distance entre les points, longueur des impulsions, distance entre les impulsions et/ou séquence des impulsions, en fonction de la nature de la surface,
- de manière à produire, par ablation au moins en partie, par le traitement par le faisceau laser intense pulsé, une structure de surface à échelle multiple dans le domaine du sous-micron et du micron, adaptée aux propriétés intrinsèquement non homogènes dans le domaine du sous-millimètre de la surface du substrat, le matériau enlevé par le faisceau laser pouvant se redéposer en partie à l'extérieur de la partie exposée au laser.

2. Procédé suivant la revendication 1,
dans lequel on utilise un substrat comprenant
- au moins une fibre minérale et/ou un carbone non fibreux,
- un matériau composite contenant du nitrure de bore et ayant une matrice de céramique et/ou de carbone,
- au moins un matériau composite métal - céramique ou
- au moins un matériau composite en un métal et/ou en un alliage métallique, qui a des particules et/ou des fibres conductrices de la chaleur contenant du carbone et/ou du nitrure de bore.

3. Procédé suivant l'une des revendications 1 à 2,
dans lequel on utilise un substrat comprenant des fibres et on choisit les paramètres du procédé en fonction de la présence de fibres, de leurs orientations, de leurs proportions dans le matériau composite et de leurs positions par rapport à la surface.

4. Procédé suivant l'une des revendications 1 à 3,
dans lequel on utilise un laser focalisé ayant des diamètres de faisceau laser de 20 µm à 100 µm à la surface du substrat.

5. Procédé suivant l'une des revendications 1 à 4,
dans lequel on balaie la surface du substrat en des positions d'une trame de points choisie librement, les points étant balayés à une distance dans la plage comprise entre la moitié et 10 fois le diamètre du faisceau laser.

6. Procédé suivant l'une des revendications 1 à 5,
dans lequel on expose les points à une longueur des impulsions comprise entre 1 ns et 1 000 ns, à une séquence des impulsions comprise respectivement entre 50 et 500 impulsions, à une distance entre les impulsions comprise entre 50 ns et 1 s et à des puissances de pointe des impulsions comprises entre 1 kW et 100 kW.

7. Procédé suivant l'une des revendications 1 à 6,
dans lequel on n'expose, pour la structuration de la surface du substrat, des points individuels de la trame de points qu'une fois au laser.

8. Procédé suivant l'une des revendications 1 à 7,
dans lequel on règle, pour chaque point de la trame de points, une longueur d'impulsion pouvant être choisie librement entre 50 ns et 200 ns.

9. Procédé suivant l'une des revendications 1 à 8,
dans lequel on règle, pour chaque point de la trame de points, une distance entre les impulsions, pouvant être choisie librement et réglée de manière variable entre les divers points, comprise entre 50 ns et 1 s.

10. Procédé suivant l'une des revendications 1 à 4,
dans lequel on expose, pour la structuration de la surface du substrat, au moins en partie plusieurs fois, divers points de la trame de points.

11. Procédé suivant l'une des revendications 1 à 10,
dans lequel on utilise un substrat ayant une surface, qui est revêtue au moins en partie d'une couche d'oxyde.

12. Procédé suivant l'une des revendications 1 à 11,
dans lequel on choisit les paramètres du procédé à régler localement à proximité immédiate dans le temps du traitement, en exploitant parallèlement des données de capteur de la surface du substrat.
